(19)

Europäisches
Patentamt
European
Patent Office
Office européen
des brevets

(11) **EP 4 079 690 A1**

(12) **EUROPEAN PATENT APPLICATION**
published in accordance with Art. 153(4) EPC

(43) Date of publication:
**26.10.2022 Bulletin 2022/43**

(21) Application number: **20900740.0**

(22) Date of filing: **16.12.2020**

(51) International Patent Classification (IPC):
*C01G 49/00* (2006.01)     *C09C 1/24* (2006.01)
*C09C 3/06* (2006.01)

(52) Cooperative Patent Classification (CPC):
**C01G 49/00; C09C 1/24; C09C 3/06**

(86) International application number:
**PCT/JP2020/046993**

(87) International publication number:
**WO 2021/125231 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2019 JP 2019230279**

(71) Applicant: **Kogakuin University**
**Tokyo 163-8677 (JP)**

(72) Inventors:
• **HASHIMOTO, Hideki**
**Tokyo 163-8677 (JP)**

• **ASOH, Hidetaka**
**Tokyo 163-8677 (JP)**
• **TAKAISHI, Taigo**
**Kyoto-shi, Kyoto 615-0053 (JP)**
• **INADA, Hirofumi**
**Otsu-shi, Shiga 520-2141 (JP)**
• **ARAKAWA, Yuya**
**Kyoto-shi, Kyoto 600-8872 (JP)**

(74) Representative: **Nordmeyer, Philipp Werner**
**df-mp Dörries Frank-Molnia & Pohlman**
**Patentanwälte Rechtsanwälte PartG mbB**
**Theatinerstraße 16**
**80333 München (DE)**

(54) **IRON OXIDE POWDER AND METHOD FOR MANUFACTURING SAME**

(57)     Provided are: an iron oxide powder, including an iron oxide particle having an agglomerate of primary particles of iron oxide and a coating layer consisting of silica which covers at least a part of the surface of the agglomerate, in which Al is solid-dissolved in and alumina particles are scattered on a surface of the primary particles of iron oxide, the agglomerate has a porous structure having pores inside and on the surface thereof, and the content of Si is from 8 mol% to 50 mol% with respect to the total content of Al, Si, and Fe; and a method of producing the same.

FIG.1A

FIG.1B

EP 4 079 690 A1

**Description**

Technical Field

The present invention relates to an iron oxide powder and a method of producing the same.

Background Art

Red iron oxide powders are used as colorants in the fields of asphalt, ceramics, plastics, cosmetics, and the like, for example. When used as colorants, they are required to develop more vivid colors, that is, to have high chroma. In the producing process, they may be exposed to a high-temperature environment and required to maintain high chroma even when exposed to such an environment.

Regarding iron oxide powders, for example, Japanese Patent Application Laid-Open (JP-A) No. 2015-86126 discloses an iron oxide particle powder which is characterized by having an Al content of from 20 mol% to 60 mol%, an average particle size of from 0.03 $\mu$m to 0.2 $\mu$m, a granular particle shape, and a crystal structure including two types of hematite structures or a hematite structure and a corundum structure. JP-ANo. 2004-43208 and Hideki Hashimoto, et al. ACS Appl. Mater. Interfaces 2014, 6, 20282-20289 disclose an Al-substituted hematite which is produced by mixing an iron compound and an aluminum compound, adding citric acid and ethylene glycol to the mixture of the iron compound and the aluminum compound to form a gel, thermally decomposing the gel, and calcining the obtained thermal decomposition product. Hideki Hashimoto, et al. Dyes and Pigments 95 (2012) 639-643  discloses a red pigment obtained by heating a tubular iron oxide produced by an iron-oxidizing bacterium.

SUMMARY OF INVENTION

Technical Problem

However, it cannot be said that the iron oxide powders disclosed in JP-A No. 2015-86126, JP-A No. 2004-43208, Hideki Hashimoto, et al. ACS Appl. Mater. Interfaces 2014, 6, 20282-20289, and Hideki Hashimoto, et al. Dyes and Pigments 95 (2012) 639-643 have high chroma. In addition, the iron oxide powders tend to fade when exposed to a high-temperature environment and have insufficient heat resistance.

Therefore, according to one aspect of the present disclosure, a highly chromatic, heat-resistant, and uniform iron oxide powder and a method of producing the same are provided. Solution to Problem

The means for solving the above-described problems include the following aspects.

<1> An iron oxide powder, including an iron oxide particle having an agglomerate of primary particles of iron oxide and a coating layer including silica which covers at least a part of a surface of the agglomerate, in which Al is solid-dissolved in and alumina particles are scattered on a surface of, the primary particles of iron oxide, the agglomerate has a porous structure having pores inside and on the surface thereof, and a content of Si is from 8 mol% to 50 mol% with respect to a total content of Al, Si, and Fe.

<2> The iron oxide powder according to <1>, wherein the coating layer has an average thickness of from 3 nm to 12 nm.

<3> The iron oxide powder according to <1> or <2>, wherein the iron oxide particle has an average diameter of from 0.3 $\mu$m to 2 $\mu$m and an average thickness of from 0.15 $\mu$m to 0.8 $\mu$m.

<4> The iron oxide powder according to any one of <1> to <3>, wherein the primary particles of iron oxide have an average particle size of from 10 nm to 50 nm.

<5> The iron oxide powder according to any one of <1> to <4>, wherein the alumina particles have an average particle size of from 3 nm to 9 nm.

<6> The iron oxide powder according to any one of <1> to <5>, wherein a content of Al is from 10 mol% to 80 mol% with respect to a total content of Al and Fe.

<7> The iron oxide powder according to any one of <1> to <6>, wherein chroma c* in an L* a* b* color system is from 60 to 80.

<8> The iron oxide powder according to any one of <1> to <7>, wherein lightness L* in an L* a* b* color system is from 48 to 54.

<9> The iron oxide powder according to any one of <1> to <8>, wherein a* in an L* a* b* color system is from 35 to 40.

<10> The iron oxide powder according to any one of <1> to <9>, wherein b* in an L* a* b* color system is from 46 to 55.

<11> The iron oxide powder according to any one of <1> to <10>, wherein, when chroma before heating is designated as A and chroma after heating at 1000°C for 3 hours is designated as B, A - B is 3 or less.

<12> A method of producing an iron oxide powder, including:

a step of preparing an agglomerate having a porous structure having pores inside and on a surface thereof, and in which primary particles of iron oxide are agglomerated, wherein alumina particles are scattered on a surface of, and Al is solid-dissolved in, the primary particles; and a step of mixing the agglomerate with alkoxysilane, wherein in the mixing step, mixing is carried out such that an amount of Si used is from 8 mol% to 50 mol% with respect to a total amount of Al, Si, and Fe used.

<13> The method of producing an iron oxide powder according to <12>, wherein the preparation step includes: a step of mixing at least one metal salt selected from the group consisting of a ferrous salt and a ferric salt, an aluminum source, and a base, thereby producing a precursor by a co-precipitation method; and a step of calcining the precursor, wherein in the step of calcining the precursor, mixing is carried out such that an amount of Al used is from 10 mol% to 80 mol% with respect to a total amount of Al and Fe, and in the step of calcining the precursor, calcination is carried out at from 600°C to 1200°C.

<14> The method of producing an iron oxide powder according to <13>, wherein, in the step of calcining the precursor, a temperature increase rate to a maximum attained temperature is from 0.1°C/min to 200°C/min, and the maximum attained temperature is maintained for from 0.1 to 48 hours.

<15> The method of producing an iron oxide powder according to <13> or <14>, wherein the metal salt is at least one selected from the group consisting of iron (III) nitrate, iron (II) sulfate, and iron (II) chloride, the aluminum source is aluminum nitrate, and the base is ammonium hydrogen carbonate.

<16> The metal salt is iron (II) sulfate, the aluminum source is aluminum sulfate, and the base is sodium hydrogen carbonate.

Advantageous Effects of Invention

According to one aspect of the disclosure, a highly chromatic, heat-resistant, and uniform iron oxide powder and a method of producing the same can be provided.

BRIEF DESCRIPTION OF DRAWINGS

[FIG. 1A] FIG. 1A is a low-magnification secondary electron image of a scanning transmission electron microscope showing the structure of particles contained in the powder before silica coating treatment in Example 1.

[FIG. 1B] FIG. 1B is a high-magnification secondary electron image of a scanning transmission electron microscope showing the structure of particles contained in the powder before silica coating treatment in Example 1.

[FIG. 2] FIG. 2 is a scanning electron micrograph of the iron oxide powder in Comparative Example 1.

[FIG. 3] In FIG. 3, the left panel is a scanning electron micrograph of the iron oxide powder in Comparative Example 2, the center panel is a scanning electron micrograph of the iron oxide powder in Comparative Example 2 after being heated at 1000°C for 3 hours, and the right panel is a scanning electron micrograph of the iron oxide powder in Comparative Example 2 after being heated at 1200°C for 3 hours.

[FIG. 4] In FIG. 4, the left panel is a scanning electron micrograph of the iron oxide powder in Example 1, the center panel is a scanning electron micrograph of the iron oxide powder in Example 1 after being heated at 1100°C for 3 hours, and the right panel is a scanning electron micrograph of the iron oxide powder in Example 1 after being heated at 1200°C for 3 hours.

[FIG. 5] In FIG. 5, the left panel is a scanning electron micrograph of the iron oxide powder in Example 4, the center panel is a scanning electron micrograph of the iron oxide powder in Example 4 after being heated at 1100°C for 3 hours, and the right panel is a scanning electron micrograph of the iron oxide powder in Example 4 after being heated at 1200°C for 3 hours.

[FIG. 6] In FIG. 6, the left panel is a scanning electron micrograph of the iron oxide powder in Comparative Example 2, the right panel is a scanning electron micrograph of the iron oxide powder in Comparative Example 2 after pulverization treatment.

[FIG. 7] In FIG. 7, the left panel is a scanning electron micrograph of the iron oxide powder in Example 4, the right panel is a scanning electron micrograph of the iron oxide powder in Example 4 after pulverization treatment.

DESCRIPTION OF EMBODIMENTS

Hereinafter, the iron oxide powder and a method for producing the same as one aspect of the invention will be described in detail.

The numerical range indicated herein by using "to" means a range including the numerical values before and after "to" as the minimum value and the maximum value, respectively.

In the stepwise numerical range described herein, the upper limit value or the lower limit value described in one numerical range may be replaced with the upper limit value or the lower limit value of another stepwise numerical range described herein. Further, in the numerical range described herein, the upper limit value or the lower limit value described in a certain numerical range may be replaced with the value shown in the Examples.

The amount of each component in the composition described herein means the total amount of a plurality of substances present in the composition unless otherwise specified, when a plurality of substances corresponding to the respective components are present in the composition.

A combination of two or more preferred embodiments described herein is a more preferred embodiment.

The term "step" used herein is included in this term not only as an independent step but also as long as the intended purpose of the step is achieved even if it cannot be clearly distinguished from other steps.

The iron oxide powder of the invention includes an iron oxide particle having an agglomerate of primary particles of iron oxide and a coating layer consisting of silica which covers at least a part of the surface of the agglomerate, wherein Al is solid-dissolved in and alumina particles are scattered on a surface of the primary particles of iron oxide, the agglomerate has a porous structure having pores inside and on the surface thereof, and the content of Si is from 8 mol% to 50 mol% with respect to the total content of Al, Si, and Fe.

Due to the above structure, the iron oxide powder of the disclosure has high chroma, uniformity, and excellent heat resistance.

It is considered that the iron oxide powder of the disclosure has high chroma because it has a porous structure in which an agglomerate constituting an iron oxide particle has pores inside and on the surface thereof such that the dispersibility is high and the agglomeration of iron oxide particles is reduced. It is also considered that in the iron oxide powder of the disclosure, an iron oxide particle has a coating layer consisting of silica, and therefore, sintering of iron oxide particles does not proceed easily, and chroma does not easily decrease even when heated. It is further considered that in the iron oxide powder of the disclosure, the content of Si is from 8 mol% to 50 mol% with respect to the total content of Al, Si, and Fe, and therefore, the surface of the agglomerate of primary particles of iron oxide is coated, if appropriate, with silica, resulting in excellent uniformity.

Meanwhile, JP-A No. 2015-86126 discloses an iron oxide particle powder which is characterized by having an Al content of from 20 mol% to 60 mol%, an average particle size of from 0.03 $\mu$m to 0.2 $\mu$m, a granular particle shape, and a crystal structure including two types of hematite structures or a hematite structure and a corundum structure. The iron oxide powder disclosed in JP-A No. 2015-86126 is obtained by washing and drying aluminumcontaining iron oxide particles obtained by adding a solution containing $Fe^{2+}$ and $Al^{3+}$ to an alkaline solution containing a carbonate and performing aging or air-oxidizing at a temperature of less than 50°C, and then calcining the particles in a temperature range of from 700°C to 1050°C. Iron oxide particles that constitute the iron oxide powder obtained by this method do not have a porous structure having pores inside and on the surface thereof, and alumina particles are not scattered thereover. JP-A No. 2015-86126 teaches that the color tones of a coating film are red with a value a* of from 25.0 to 40.0, yellow with a value b* of from 25.0 to 35.0, and chroma with a value C* of from 35.0 to 50.0, indicating that the chroma is low. In addition, JP-A No. 2015-86126 does not focus on heat resistance.

Further, JP-A No. 2004-43208 and Hideki Hashimoto, et al. ACS Appl. Mater. Interfaces 2014, 6, 20282-20289 disclose an Al-substituted hematite which is produced by mixing an iron compound and an aluminum compound, adding citric acid and ethylene glycol to the mixture of the iron compound and the aluminum compound to form a gel, thermally decomposing the gel, and calcining the obtained thermal decomposition product. In other words, the Al-substituted hematite disclosed in JP-A No. 2004-43208 and Hideki Hashimoto, et al. ACS Appl. Mater. Interfaces 2014, 6, 20282-20289 is produced by a complex polymerization method. The structure of the agglomerate, in which primary particles of iron oxide over which alumina particles are scattered and in which Al is solid-dissolved are agglomerated, and which has a porous structure having pores inside and on the surface thereof, and the structure of the Al-substituted hematite are completely different from each other.

Further, Hideki Hashimoto, et al. Dyes and Pigments 95 (2012) 639-643 discloses a red pigment obtained by heating a tubular iron oxide produced by an iron-oxidizing bacterium. The iron oxide particles constituting the red pigment have a structure in which hematite coated with silicate is deposited on the wall surface of the tube. Hideki Hashimoto, et al. Dyes and Pigments 95 (2012) 639-643 teaches that L* is 47.3, a* is 34.1, and b* is 34.6, indicating that chroma is low. Further, the red pigment disclosed in Hideki Hashimoto, et al. Dyes and Pigments 95 (2012) 639-643 has insufficient heat resistance.

[Iron Oxide Powder]

The iron oxide powder of the disclosure includes an iron oxide particle having an agglomerate of primary particles of iron oxide and a coating layer consisting of silica which covers at least a part of the surface of the agglomerate. The iron oxide powder of the disclosure may include components other than the above-described iron oxide particles.

The primary particles of iron oxide are preferably hematite ($\alpha$-$Fe_2O_3$) primary particles from the viewpoint of obtaining a bright red iron oxide powder. In other words, it is preferable that the iron oxide particle is a hematite particle. The iron oxide powder of the disclosure may include other particles such as limonite particles, magnetite particles, wustite particles, and maghemite particles, in addition to hematite particles. The iron oxide powder of the disclosure may include other particles singly, or in combination of two or more kinds thereof. From the viewpoint of obtaining an iron oxide powder having high chroma, the iron oxide powder of the disclosure includes preferably 90% by mass or more, more preferably 95% by mass, and still more preferably 98% by mass or more of hematite particles with respect to the total mass of the iron oxide powder.

Examples of the shape of the iron oxide particle include a disk shape, a spherical shape, and a flat plate shape. The disk shape means a shape that is circular in a plan view and has a thickness. The circular shape is a concept that encompasses not only a perfect circle and an ellipse but also an irregular circular shape. It is preferable that the above-described particle shape is a disk shape from the viewpoint of obtaining iron oxide powder having higher chroma. Specifically, it is preferable that the average diameter of the iron oxide particle is from 0.3 μm to 2 μm and the average thickness thereof is from 0.15 μm to 0.8 μm, and it is more preferable that the average diameter is from 0.6 μm to 1.6 μm and the average thickness is from 0.18 μm to 0.75 μm.

The average diameter and the average thickness of the iron oxide particle are measured by, for example, the following method using a scanning electron microscope. First, the iron oxide powder is observed using a scanning electron microscope (trade name: "JSM-6701F", manufactured by JEOL Ltd.). For each particle included in the observation field, the longest diameter is determined as the diameter and the thickest part is determined as the thickness. The maximum value and the minimum value are extracted from the values of a plurality of diameters obtained by the measurement, the average value is calculated based on the maximum value and the minimum value, and the calculated value is used as the average diameter. Similarly, the maximum value and the minimum value are extracted from the values of a plurality of thicknesses obtained by the measurement, the average value is calculated based on the maximum value and the minimum value, and the calculated value is used as the average thickness.

Each iron oxide particle has an agglomerate of primary particles of iron oxide and a coating layer consisting of silica which covers at least a part of the surface of the agglomerate,

(Agglomerate of Primary Particles of Iron Oxide)

The agglomerate of primary particles of iron oxide is a structure in which the primary particles of iron oxide are agglomerated with each other. In the disclosure, the agglomerate has a porous structure having pores inside and on the surface thereof. A pore present inside of the agglomerate may be a hole that communicates with another hole or may be a throughhole that penetrates the agglomerate.

It is possible to confirm whether or not the iron oxide particle included in the iron oxide powder has an agglomerate having a porous structure having pores inside and on the surface thereof by analyzing a powder obtained after removing the coating layer consisting of silica from the iron oxide particles. Specifically, it can be confirmed by the following method.

First, the iron oxide powder is immersed in an aqueous solution of a strong base such as hydrofluoric acid or sodium hydroxide. Next, it is washed with pure water and dried. The pore size distribution of the powder obtained by drying is measured by the nitrogen adsorption method. In a case in which A characteristic peak is seen in the dV/d (logD) differential pore volume distribution, it is judged that the iron oxide particle included in the iron oxide powder has an agglomerate having a porous structure having pores inside and on the surface thereof.

The average particle size of primary particles of iron oxide may be 10 nm or more. From the viewpoint of obtaining an iron oxide powder having higher chroma, the average particle size of primary particles of iron oxide is preferably 55 nm or less, more preferably 50 nm or less, still more preferably 35 nm or less, and particularly preferably 25 nm or less.

The average particle size of primary particles of iron oxide is measured by, for example, the following method using a scanning transmission electron microscope.

First, the iron oxide powder is observed using a scanning transmission electron microscope (trade name: "JEM-2100F" manufactured by JEOL Ltd.). Each particle forming an agglomerate is determined as a primary particle, the scanning transmission electron microscope is adjusted to a magnification that allows the primary particle to be image-analyzed, and the image is taken. The maximum diameter is measured for a plurality of primary particles selected from the captured images. The maximum value and the minimum value are extracted from the values of a plurality of maximum diameters obtained by the measurement, the average value is calculated based on the maximum value and the minimum value, and the calculated value is used as the average particle size.

Al is solid-dissolved in and alumina particles are scattered on a surface of the primary particles of iron oxide. It is possible to confirm whether or not Al is solid-dissolved in the primary particles of iron oxide by the following method using an X-ray diffractometer.

The lattice constant of hematite contained in the iron oxide powder is calculated using an X-ray diffractometer. The calculated lattice constant is compared with the known hematite and corundum lattice constants. In a case in which the calculated lattice constant is shorter than the known lattice constant of hematite, it is judged that Al is solid-dissolved in the primary particles of iron oxide. Further, the amount of solid-dissolved Al is calculated by comparing the calculated lattice constant with the known hematite and corundum lattice constants.

The amount of Al solid-dissolved in the primary particles of iron oxide is not particularly limited, but is preferably from 0.5 mol% to 20 mol% and more preferably from 1 mol% to 15 mol%.

Further, it is possible to confirm whether or not alumina particles are scattered on a surface of the primary particles of iron oxide using a scanning transmission electron microscope.

When alumina particles are scattered, it means that alumina particles are not agglomerated in one place, and adjacent alumina particles are separated from each other. In addition, when alumina particles are present over the primary particles of iron oxide, it means that alumina particles are attached to the surface of a primary particle of iron oxide.

In the disclosure, it is considered that the iron oxide powder has high chroma because Al is solid-dissolved in primary particles of iron oxide. In the disclosure, it is also considered that it is possible to suppress the decrease in chroma of the iron oxide powder by high-temperature heating because alumina particles are scattered on a surface of the primary particles of iron oxide

It is preferable that the average particle size of alumina particles is smaller than the average particle size of primary particles of iron oxide, and is preferably from 3 nm to 9 nm and more preferably from 3 nm to 6 nm.

The average particle size of alumina particles is measured by, for example, the following method using a scanning transmission electron microscope.

First, the iron oxide powder is observed using a scanning transmission electron microscope (trade name: "JEM-2100F" manufactured by JEOL Ltd.). Each particle forming an agglomerate is determined as a primary particle, the scanning transmission electron microscope is adjusted to a magnification that allows alumina particles scattered on a surface of the primary particle to be image-analyzed, and the image is taken. The maximum diameter is measured for a plurality of alumina particles selected from the captured images. The maximum value and the minimum value are extracted from the values of a plurality of maximum diameters obtained by the measurement, the average value is calculated based on the maximum value and the minimum value, and the calculated value is used as the average particle size of alumina particles.


(Coating Layer)

Each iron oxide particle has a coating layer consisting of silica which covers at least a part of the surface of the agglomerate. The coating layer may cover only a part of the surface of the agglomerate or the entire surface of the agglomerate. The surface of the agglomerate corresponds to the surfaces of primary particles of iron oxide, and it corresponds to the surfaces of the alumina particles at a part where alumina particles are present on the surface of a primary particle of iron oxide.

The iron oxide powder of the disclosure has not only excellent heat resistance but also high strength because an iron oxide particle has a coating layer. For example, even when the iron oxide powder of the disclosure is pulverized, the agglomerate having a porous structure is unlikely to be destroyed such that the decrease in chroma is suppressed.

The average thickness of the coating layer is preferably from 3 nm to 12 nm and more preferably from 3 nm to 9 nm.

The average thickness of the coating layer is measured by, for example, the following method using a scanning transmission electron microscope.

First, the iron oxide powder is observed using a scanning transmission electron microscope (trade name: "JEM-2100F" manufactured by JEOL Ltd.). The magnification is adjusted such that the coating layer can be image-analyzed. The maximum and minimum thickness of the amorphous part is measured in the observation field. An average value is calculated based on the maximum thickness and the minimum thickness, and the calculated value is taken as the average thickness of the coating layer.

The content of Si in the iron oxide powder of the disclosure is from 8 mol% to 50 mol% with respect to the total content of Al, Si, and Fe. From the viewpoint of obtaining an iron oxide powder having higher chroma and more excellent heat resistance, it is preferable that the content of Si is preferably from 10 mol% to 45 mol% and more preferably from 20 mol% to 40 mol%. When the content of Si is less than 8 mol%, it results in poor heat resistance. Meanwhile, when the content of Si exceeds 50 mol%, Silica is unevenly distributed, resulting in poor uniformity.

The Al content in the iron oxide powder of the disclosure is preferably from 10 mol% to 80 mol%, more preferably from 15 mol% to 50 mol%, and still more preferably from 20 mol% to 40 mol% with respect to the total content of Al and Fe.

For the iron oxide powder of the disclosure, lightness $L^*$ in an $L^* a^* b^*$ color system is preferably 48 or more and more preferably 51 or more. The upper limit of the lightness $L^*$ is not particularly limited, but is preferably 54 or less.

For the iron oxide powder of the disclosure, lightness $a^*$ in an $L^* a^* b^*$ color system is preferably 35 or more and more preferably 36 or more. The upper limit of the lightness $a^*$ is not particularly limited, but is preferably 40 or less.

For the iron oxide powder of the disclosure, lightness $b^*$ in an $L^* a^* b^*$ color system is preferably 46 or more and more preferably 49 or more. The upper limit of the lightness b* is not particularly limited, but is preferably 55 or less.

For the iron oxide powder of the disclosure, chroma c* in an L* a* b* color system is preferably 60 or more and more preferably 61 or more. The upper limit of the chroma c* is not particularly limited, but is preferably 80 or less.

L*, a*, and b* are measured using a spectrophotometric colorimeter by the following method.

The coordinate values (L* value, a* value and b* value) of the CIE1976 L* a* b* color system are measured using a spectrophotometric colorimeter (trade name: "CM-5" manufactured by Konica Minolta, Inc.; light source (illuminant): CIE standard illuminant D65; standard observer (viewing angle): 2 degree field of view) for the iron oxide powder. Upon measurement, a petri dish for powder measurement is used. The iron oxide powder is filled in a petri dish and hardened before measurement.

Chroma c* is a value calculated from the values of a* and b* based on the following equation.

$$c^* = ((a^*)^2 + (b^*)^2)^{1/2}$$

For the iron oxide powder of the disclosure, chroma after heating at 1000°C for 3 hours is preferably 50 or more and more preferably 55 or more from the viewpoint of heat resistance.

Further, for the iron oxide powder of the disclosure when chroma before heating is designated as A and chroma after heating at 1000°C for 3 hours is designated as B, it is preferable that A - B is 3 or less, and it is more preferable that B is greater than A. For the iron oxide powder of the disclosure, chroma after heating at 1000°C for 3 hours may be higher than chroma before heating. It is thought this is because as a result of heating the iron oxide powder of the disclosure at 1000°C for 3 hours, alumina particles scattered on a surface of the primary particles of iron oxide are dissolved, and Al is further solid-dissolved in iron oxide, which results in an increase in the amount of Al solid-dissolved.

[Composition]

The iron oxide powder of the disclosure may be mixed with other components to form a composition. In other words, the composition of the disclosure contains the above-described iron oxide powder. The composition may be a liquid composition mixed with a liquid medium or a solid composition mixed with a solid medium.

Examples of a component that can be mixed with the iron oxide powder of the disclosure include glass. A glass composition containing the iron oxide powder of the disclosure and glass can be sintered such that a glass sintered body is formed. In a case in which a glass sintered body is formed, it is preferable that the content of glass contained in the glass composition is 50% by mass or more with respect to the total amount of the glass composition from the viewpoint of strength. Further, the content of the iron oxide powder is preferably 25% by mass or less, more preferably 20% by mass or less, and still more preferably 15% by mass or less.

[Intended Use]

Since the iron oxide powder of the disclosure has high chroma and excellent heat resistance, it can be used as, for example, a colorant. The colorant is applied to, for example, ceramics, enamel, paintings, asphalt, plastics, cosmetics, vehicles, and the like.

Further, the iron oxide powder of the disclosure can also be used in the fields of lithium-ion battery electrode materials, catalyst carriers, magnetic materials, optical electrodes, and the like.

[Ceramics]

In particular, the iron oxide powder of the disclosure is can be applied to ceramics.

It is preferable that ceramics of the disclosure contain a base material and a glaze layer provided on the base material and formed by a glaze composition containing the iron oxide powder. The glaze layer may be provided directly on the base material, or another layer may be provided between the base material and the glaze layer. Further, another layer such as a hard coat layer may be provided on the glaze layer.

The base material can be formed by, for example, pulverizing a composition for a base material containing ceramic raw materials such as kaolin, clay, porcelain stone, and feldspar and water using a pulverizer such as a ball mill, and then molding and sintering the crushed product.

The glaze layer can be formed by, for example, applying a glaze composition containing the iron oxide powder and water to the base material and sintering the glaze composition. It is preferable that the glaze composition contains glaze raw materials such as silica sand, clay, lime, feldspar, and zinc oxide as components other than the iron oxide powder.

Since the iron oxide powder of the disclosure is excellent in heat resistance, even when it is sintered after being applied to the base material, high chroma can be realized such that brightly colored ceramics can be obtained.

[Method of Producing Iron Oxide Powder]

The method of producing an iron oxide powder of the disclosure includes: a step of preparing an agglomerate having a porous structure having pores inside and on the surface thereof, in which primary particles of iron oxide are agglomerated, wherein alumina particles are scattered on a surface of, and Al is solid-dissolved in, the primary particles (preparation step); and a step of mixing the agglomerate with alkoxysilane (mixing step). In the mixing step, mixing is carried out such that the amount of Si used is from 8 mol% to 50 mol% with respect to the total amount of Al, Si, and Fe used.

(Preparation Step of Preparing Agglomerate)

In the preparation step, an agglomerate to be mixed with an alkoxysilane is prepared. An agglomerate is formed when primary particles of iron oxide are agglomerated, and has a porous structure having pores inside and on the surface thereof. Further, alumina particles are scattered on a surface of the primary particles of iron oxide, and Al is solid-dissolved in the primary particles.

It is preferable that the preparation step includes a step of mixing at least one metal salt selected from the group consisting of a ferrous salt and a ferric salt, an aluminum source, and a base thereby producing a precursor by a co-precipitation method and a step of calcining the precursor. When the precursor is calcined, an agglomerate having the above-described porous structure is obtained. The agglomerate to be mixed with an alkoxysilane may be a commercially available product.

The co-precipitation method is a method of producing a powder in which a base is added to a solution containing a plurality of target metal ions, thereby simultaneously precipitating a plurality of sparingly soluble salts. Examples of the base include ammonium hydrogen carbonate, aqueous ammonia (liquid), sodium carbonate, sodium hydrogen carbonate, sodium hydroxide, and potassium hydroxide. It is preferable that the base is ammonium hydrogen carbonate or sodium hydrogen carbonate from the viewpoint of obtaining a bright red iron oxide powder.

Specifically, the agglomerate can be produced by the following method.

First, at least one metal salt selected from the group consisting of a ferrous salt and a ferric salt is dissolved in pure water to prepare a metal salt aqueous solution. The term "ferrous salt" means a divalent iron salt, and the term "ferric salt" means a trivalent iron salt. Examples of ferrous salts include iron (II) sulfate and iron (II) chloride. Examples of ferric salts include iron (III) nitrate and ferric (III) chloride. Among them, the metal salt is preferably at least one selected from the group consisting of iron (III) nitrate, iron (II) sulfate, and iron (II) chloride.

The total concentration of the metal salt in the metal salt aqueous solution is preferably from 0.2 $mol \cdot dm^{-3}$ to 0.8 $mol \cdot dm^{-3}$ and more preferably from 0.3 $mol \cdot dm^{-3}$ to 0.7 $mol \cdot dm^{-3}$ from the viewpoint of obtaining a bright red iron oxide powder.

Next, the metal salt aqueous solution is mixed with an aluminum source. Examples of the aluminum source include aluminum nitrate, aluminum sulfate, aluminum chloride, and aluminum acetate. The aluminum source is preferably aluminum nitrate or aluminum sulfate among them. At this time, mixing is carried out such that the amount of Al used is from 10 mol% to 80 mol% with respect to the total amount of Al and Fe used.

Next, a base is added to yield a suspension. The suspension is stirred for from 10 minutes to 2 hours. After stirring, the suspension is allowed to stand for from 10 minutes to 6 hours. Then, suction filtration is carried out and the mixture is dried, thereby obtaining a precursor.

The obtained precursor is calcined. The calcination temperature is preferably from 600°C to 1200°C and more preferably from 650°C to 900°C. In calcination, the temperature increase rate to the maximum attainable temperature is preferably from 0. 1°C/min to 200°C/min and more preferably from 5°C/min to 50°C/min. In addition, the retention time at the maximum attainable temperature is from 0.1 to 48 hours and more preferably from 1 to 5 hours.

From the viewpoint of obtaining a brighter red iron oxide powder, in the method of producing an iron oxide powder of the disclosure, It is preferable that the metal salt is at least one selected from the group consisting of iron (III) nitrate, iron (II) sulfate, and iron (II) chloride, and the aluminum source is aluminum nitrate, and the base is ammonium hydrogen carbonate.

Further, as it is possible to obtain a brighter red iron oxide powder and also from the industrial viewpoint, in the method of producing an iron oxide powder of the disclosure, the metal salt is iron (II) sulfate, the aluminum source is aluminum sulfate, and the base is sodium hydrogen carbonate.

(Mixing Step of Mixing Agglomerate and Alkoxysilane)

In the mixing step, the agglomerate obtained in the preparation step is mixed with an alkoxysilane. It is preferable to disperse the agglomerate in a solvent in advance. The type of solvent is not particularly limited, and examples thereof include alcoholic solvents. As a dispersion device, it is preferable to use an ultrasonic irradiation device. The dispersion time is, for example, from 1 minute to 1 hour.

Examples of an alkoxysilane include tetramethoxysilane and tetraethoxysilane. The alkoxysilane is preferably tetraethoxysilane among them.

When mixing the agglomerate and the alkoxysilane, from the viewpoint of heat resistance, it is preferable to carry out mixing such that the amount of Si used is from 8 mol% to 50 mol% with respect to the total amount of Al, Si, and Fe used. From the viewpoint of heat resistance, it is preferable that the amount of Si used is more preferably from 10 mol% to 45 mol% and still more preferably from 20 mol% to 40 mol%.

Further, when mixing the agglomerate and the alkoxysilane, it is preferable to use a basic catalyst. Examples of a basic catalyst include aqueous ammonia, sodium hydroxide, and potassium hydroxide. It is preferable that the basic catalyst is aqueous ammonia among them.

After mixing the agglomerate and the alkoxysilane, the liquid mixture is stirred for from 1 to 5 hours. After stirring, the liquid mixture is allowed to stand, thereby volatilizing the solvent in the liquid mixture. At this time, it is preferable to promote volatilization of the solvent by heating a container accommodating the liquid mixture to from 60°C to 90°C. After volatilizing the solvent in the liquid mixture, the iron oxide powder of the disclosure is obtained.

Examples

Hereinafter, the invention will be described in more detail with reference to Examples, but the invention is not limited to the following Examples as long as the gist of the invention is not exceeded.

<Example 1>

Iron nitrate nonahydrate was dissolved in water, thereby preparing a 0.5 mol·dm$^{-3}$ iron nitrate aqueous solution. Aluminum nitrate nonahydrate was added to 100 mL of the iron nitrate aqueous solution. At this time, the amounts of iron nitrate nonahydrate and aluminum nitrate nonahydrate used were adjusted such that the amount of Al used was 30 mol% with respect to the total amount of Al and Fe used. Further, ammonium hydrogen carbonate in a molar amount (1.2 mol) 12 times the molar amount of metal ions was gradually added while stirring the aqueous solution.

Then, the aqueous solution was stirred at 200 rpm for 15 minutes. After stirring, the aqueous solution was allowed to stand for 1 hour. The obtained suspension was suctionfiltered using 3 L of pure water and 50 mL of SOLMIX (registered trademark) A-7 (manufactured by Japan Alcohol Trading CO., LTD) and vacuum dried, thereby obtaining a precursor. The color of the precursor was all brown. The precursor was heated at a temperature increase rate of 10°C/min, maintained at 700°C for 2 hours, and then left to cool. Accordingly, a powder before silica coating treatment was obtained.

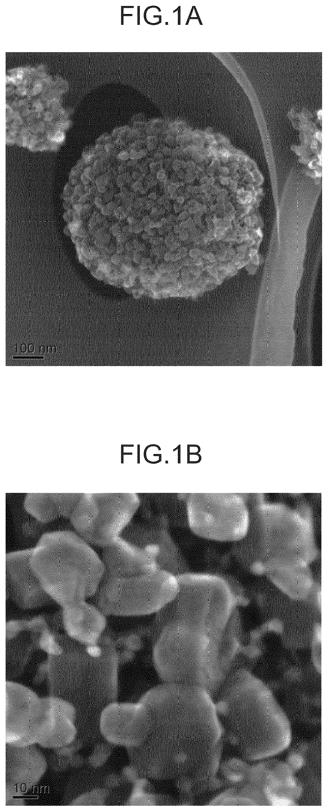

FIGS. 1A and 1B are each a secondary electron image of a scanning transmission electron microscope showing the structure of particles contained in the powder before silica coating treatment in Example 1. The powder before silica coating treatment was observed using a scanning transmission electron microscope (trade name: "JEM-2100F" manufactured by JEOL Ltd.). It was found that the primary particles of iron oxide were agglomerated to form an agglomerate, and the agglomerate had a porous structure having pores inside and on the surface thereof. The average diameter of the agglomerate was from 0.4 μm to 0.9 μm, and the average thickness thereof was from 0.2 μm to 0.3 μm. The average particle size of the primary particles of iron oxide was from 20 nm to 40 nm. Alumina particles were scattered on a surface of the primary particles of iron oxide, and the average particle size of the alumina particles was 5 nm. It was also found that Al was solid-dissolved in the primary particles of iron oxide. The composition of the powder before silica coating treatment was almost the same as the charged composition.

Next, 1 g of the powder before silica coating treatment and 10 g of SOLMIX A-7 (manufactured by Japan Alcohol Trading CO., LTD) were mixed. Dispersion treatment was performed for 20 minutes using an ultrasonic irradiation device (product name "Yamato 2510" manufactured by Branson Ultrasonics Corporation). Then, 0.31 mL of tetraethoxysilane and 1.5 mL of 10% by mass aqueous ammonia were added, and the mixture was stirred for 3 hours. At this time, the amount of tetraethoxysilane used was adjusted such that the amount of Si used was 9 mol% with respect to the total amount of Al, Si, and Fe used. After stirring, the mixture was heated on a hot stirrer set at 80°C until the solvent was completely volatilized. Accordingly, an iron oxide powder was obtained.

The average diameter and the average thickness of the iron oxide particle contained in the obtained iron oxide powder were almost the same as those of the agglomerate in the powder before silica coating treatment. The average diameter and average thickness of the particles were measured using a scanning electron microscope (trade name: "JSM-6701F" manufactured by JEOL Ltd.).

The average thickness of the coating layer of the particles contained in the obtained iron oxide powder was 1 nm. The average thickness of the coating layer was measured using a scanning transmission electron microscope (trade name: "JEM-2100F" manufactured by JEOL Ltd.).

<Example 2 to Example 4, Comparative Example 1, Comparative Example 2>

Iron oxide powders were obtained in the same manner as in Example 1 except that the amount of Si used with respect to the total amount of Al, Si, and Fe was changed such that the content of Si with respect to the total content of Al, Si, and Fe was the value shown in Table 1 for each powder.

<Comparative Example 3>

Iron (III) oxide (manufactured by NACALAI TESQUE, INC.) was used as a commercially available product. The average diameter of the particles contained in the commercially available powder was from 0.06 $\mu$m to 0.3 $\mu$m. When the commercially available powder was observed using a scanning electron microscope (trade name: "JSM-6701F" manufactured by JEOL Ltd.), although the primary particles of iron oxide were agglomerated, they did not have a porous structure with pores inside and on the surface thereof. Al was not solid-dissolved in the commercially available powder, and alumina particles were not present on the surfaces of the primary particles of iron oxide.

<Comparative Example 4>

An iron oxide powder was obtained in the same manner as in Example 1 except that the powder before silica coating treatment in Example 1 was changed to the commercially available product.

<Comparative Example 5>

An iron oxide powder was obtained in the same manner as in Comparative Example 4 except that the amount of Si used with respect to the total amount of Al, Si, and Fe was changed such that the content of Si with respect to the total content of Al, Si, and Fe was the value shown in Table 1.
Regarding the iron oxide powders obtained in the Examples and the Comparative Examples, L*, a*, and b* were measured, and heat resistance, strength, and uniformity were evaluated.

[L*, a*, and b*]

The coordinate values (L* value, a* value, and b* value) of the CIE1976 L* a* b* color system were measured using a spectrophotometric colorimeter (trade name: "CM-5" manufactured by Konica Minolta, Inc.; light source (illuminant): CIE standard illuminant D65; standard observer (viewing angle): 2-degree field of view) for the iron oxide powders of the Examples and the Comparative Examples. Upon measurement, a petri dish for powder measurement was used.

[Chroma c*]

Chroma c* was calculated from the values of a* and b* based on the following equation.

$$c^* = ((a^*)^2 + (b^*)^2)^{1/2}$$

[Heat Resistance]

From the iron oxide powders of the Examples and the Comparative Examples, 0.3 g of each was weighed and used as an evaluation. The evaluation sample was heated at a temperature increase rate of 10°C/min and retained at 1000°C for 3 hours. After allowing the evaluation sample to cool, L*, a*, and b* were measured and the chroma c* was calculated for the sample. The method of measuring L*, a*, and b* is as described above. It was judged that the smaller the degree of decrease in the value after the heat treatment, the better the heat resistance as compared with the value before heat treatment. Similarly, evaluation was carried out when the sample was retained at 1100°C for 3 hours, at 1200°C for 3 hours, and at 1300°C for 3 hours. Table 1 shows the measurement results and the calculation results. In Table 1, "-" means "Not measured."

[Strength]

From the iron oxide powders of the Examples and the Comparative Examples, 0.3 g of each was weighed and used as an evaluation sample. The evaluation sample was placed in an alumina mortar and pulverized for 10 minutes. After pulverization treatment, L*, a*, and b* of the evaluation sample were measured, and the chroma c* was calculated.

The method of measuring L*, a*, and b* is as described above. It was judged that the smaller the degree of decrease in the value after the pulverization treatment, the higher the strength as compared with the value before pulverization treatment. Table 1 shows the measurement results and the calculation results. In Table 1, "-" means "Not measured."

[Uniformity]

For the iron oxide powders of the Examples and the Comparative Examples, microscope images were obtained using a scanning electron microscope (trade name: "JSM-6701F" manufactured by JEOL Ltd.) or a scanning transmission electron microscope (trade name: "JEM-2100F" manufactured by JEOL Ltd.). From the microscopic images, it was confirmed whether or not the coating layer consisting of silica was uniformly formed on the surface of the agglomerate. When it was formed uniformly, it was determined to be "G (Good)", and when it was not uniformly formed, it was determined to be "NG (Not Good)." Specifically, when silica particles were observed, the uniformity was determined to be "NG". In Table 1, "-" means "Not measured."

[Table 1]

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| Structural analysis | Formation of porous structure | Present | Present | Present | Present | Present | Present | Absent | Absent | Absent |
| | Solid-dissolved Al | Present | Present | Present | Present | Present | Present | Absent | Absent | Absent |
| | Scattered aluminum particles | Present | Present | Present | Present | Present | Present | Absent | Absent | Absent |
| Si / (Al+Si+Fe) x 100 (mol%) | | 9 | 18 | 28 | 37 | 57 | 0 | 0 | 9 | 37 |
| Silica film thickness (nm) | | 1 | - | - | 9 | - | - | - | - | - |
| $L^*$ | | 47.71 | 50.00 | 51.65 | 53.25 | 49.6 | 47.24 | 31.8 | 34.3 | 34.96 |
| $a^*$ | | 34.6 | 36.62 | 36.81 | 36.43 | 39.36 | 35.61 | 26.31 | 34.07 | 33.84 |
| $b^*$ | | 45.04 | 48.13 | 49.54 | 51.76 | 55.43 | 46.30 | 17.32 | 24.9 | 25.31 |
| Chroma ($c^*$) | | 56.80 | 60.48 | 61.72 | 63.29 | 67.98 | 58.41 | 31.50 | 42.20 | 42.26 |
| 1000°C, 3 hours later | $L^*$ | 49.5 | 50.57 | 52.49 | 52.96 | - | 39.7 | 28.25 | 30.25 | 29.73 |
| | $a^*$ | 36.37 | 35.66 | 35.28 | 36.91 | - | 36.03 | 14.5 | 30.08 | 30.33 |
| | $b^*$ | 50.63 | 52.37 | 52.48 | 54.59 | - | 33.01 | 5.09 | 19.75 | 21.89 |
| | Chroma ($c^*$) | 62.34 | 63.36 | 63.24 | 65.90 | - | 48.87 | 15.37 | 35.98 | 37.40 |
| 1100°C, 3 hours later | $L^*$ | 43.77 | 48.59 | 50.80 | 52.61 | - | 34.67 | - | - | - |
| | $a^*$ | 35.41 | 36.17 | 36.22 | 35.47 | - | 31.25 | - | - | - |
| | $b^*$ | 44.42 | 50.49 | 53.00 | 51.93 | - | 24.81 | - | - | - |
| | Chroma ($c^*$) | 56.81 | 62.11 | 64.19 | 62.89 | - | 39.90 | - | - | - |
| 1200°C, 3 hours later | $L^*$ | 34.73 | 38.73 | 42.23 | 45.23 | - | 31.8 | - | - | - |
| | $a^*$ | 29.42 | 32.42 | 34.12 | 36.09 | - | 26.31 | - | - | - |
| | $b^*$ | 26.92 | 35.82 | 42.16 | 48.89 | - | 17.32 | - | - | - |
| | Chroma ($c^*$) | 39.88 | 48.31 | 54.24 | 60.77 | - | 31.50 | - | - | - |

(continued)

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| 1300°C, 3 hours later | L* | 29.46 | 29.81 | 36.78 | 38.28 | - | 28.89 | - | - | - |
| | a* | 6.78 | 18.53 | 29.39 | 31.46 | - | 12.18 | - | - | - |
| | b* | 1.3 | 12.03 | 31.32 | 36.52 | - | 4.31 | - | - | - |
| | Chroma (c*) | 6.90 | 22.09 | 42.95 | 48.20 | - | 12.92 | - | - | - |
| After pulverization treatment | L* | 38.67 | 37.88 | 46.56 | 49.83 | - | 33.99 | - | - | - |
| | a* | 30.4 | 30.6 | 33.19 | 33.35 | - | 28.47 | - | - | - |
| | b* | 34.1 | 32.42 | 43.14 | 46.92 | - | 28.59 | - | - | - |
| | Chroma (c*) | 45.68 | 44.58 | 54.43 | 57.56 | - | 40.35 | - | - | - |
| Uniformity | | G | - | - | G | NG | - | - | G | NG |

As shown in Table 1, the iron oxide powders of Examples 1 to 4 had high chroma, were uniform, and maintained high chroma even when heated at 1000°C for 3 hours. Thus, it was found that the powders are excellent in excellent heat resistance. The iron oxide powders of Examples 1 to 4 were confirmed to have a bright red color without a significant decrease in chroma even after being pulverized. Thus, it was also found that they are excellent in strength.

Meanwhile, the iron oxide powder of Comparative Example 1 had a Si content of more than 50 mol% with respect to the total content of Al, Si, and Fe. Thus, it was found that the powder is inferior in uniformity.

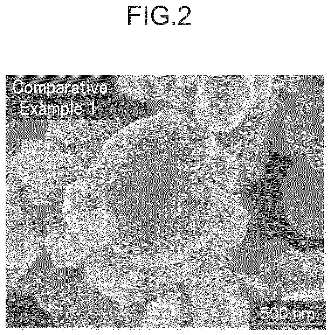

FIG. 2 is a scanning electron micrograph of the iron oxide powder in Comparative Example 1. As shown in FIG. 2, it was found that the iron oxide powder in Comparative Example 1 contained a large number of spherical silica particles.

The particles of the iron oxide powder of Comparative Example 2 did not have a coating layer of consisting of silica, and when heated at 1000°C for 3 hours, the chroma was lowered. Thus, it was found that the powder has insufficient heat resistance.

The iron oxide powder of Comparative Example 3, which is a commercially available product, had low chroma, and when heated at 1000°C for 3 hours, the chroma was greatly reduced. Thus, it was found that the powder has poor heat resistance.

The particles of the iron oxide powders of Comparative Examples 4 and 5 had a coating layer of consisting of silica, but the chroma was low, and when heated at 1000°C for 3 hours, the chroma was lowered. Thus, it was found that the powders have poor heat resistance.

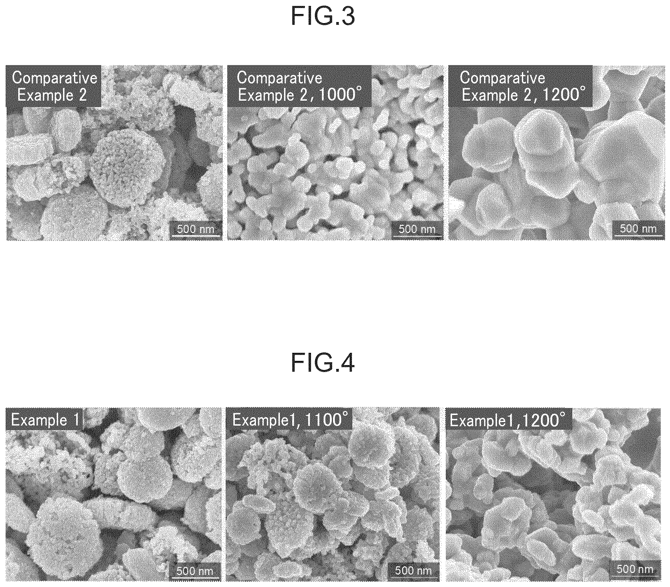

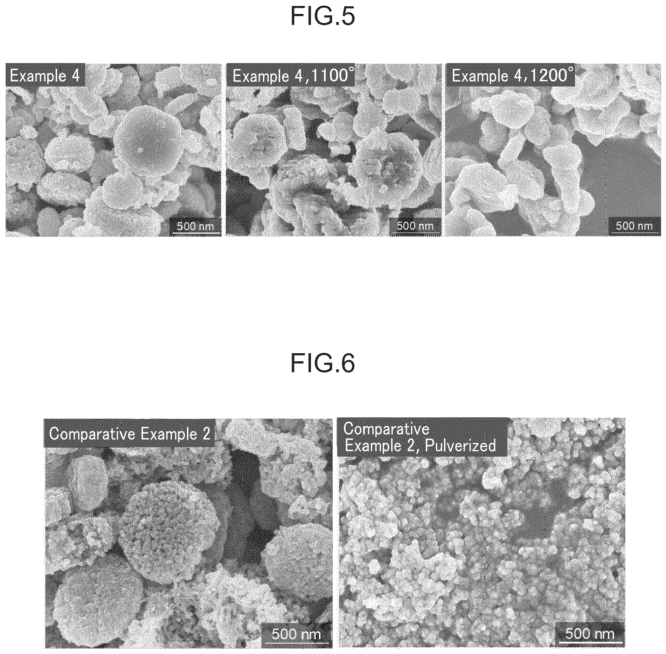

In FIG. 3, the left panel is a scanning electron micrograph of the iron oxide powder in Comparative Example 2, the center panel is a scanning electron micrograph of the iron oxide powder in Comparative Example 2 after being heated at 1000°C for 3 hours, and the right panel is a scanning electron micrograph of the iron oxide powder in Comparative Example 2 after being heated at 1200°C for 3 hours. In FIG. 4, the left panel is a scanning electron micrograph of the iron oxide powder in Example 1, the center panel is a scanning electron micrograph of the iron oxide powder in Example 1 after being heated at 1100°C for 3 hours, and the right panel is a scanning electron micrograph of the iron oxide powder in Example 1 after being heated at 1200°C for 3 hours. In FIG. 5, the left panel is a scanning electron micrograph of the iron oxide powder in Example 4, the center panel is a scanning electron micrograph of the iron oxide powder in Example 4 after being heated at 1100°C for 3 hours, and the right panel is a scanning electron micrograph of the iron oxide powder in Example 4 after being heated at 1200°C for 3 hours.

As shown in FIG. 3, it was found that in the iron oxide powder in Comparative Example 2, when the iron oxide powder was heated at 1000°C for 3 hours, iron oxide particles were sintered and grew. Meanwhile, as shown in FIG. 4, it was found that in the iron oxide powder in Example 1, the iron oxide particles retained their pre-heated structure even when heated at 1100°C for 3 hours. Further, as shown in FIG. 5, it was found that in the iron oxide powder of Example 4, iron oxide particles retained the structure before heating even when heated at 1200°C for 3 hours.

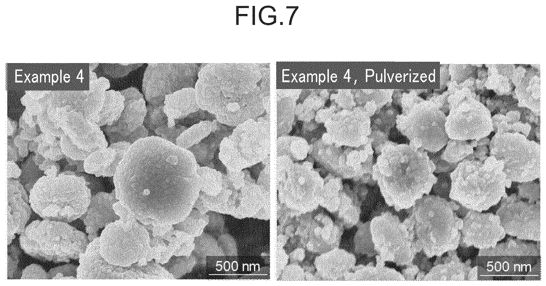

In FIG. 6, the left panel is a scanning electron micrograph of the iron oxide powder in Comparative Example 2, and the right panel is a scanning electron micrograph of the iron oxide powder in Comparative Example 2 after pulverization treatment. In FIG. 7, the left panel is a scanning electron micrograph of the iron oxide powder in Example 4, and the right panel is a scanning electron micrograph of the iron oxide powder in Example 4 after pulverization treatment.

As shown in FIG. 6, it was found that the iron oxide powder in Comparative Example 2 lost its shape when treated by pulverization. Meanwhile, as shown in FIG. 7, it was found that in the iron oxide powder in Example 4, iron oxide particles retained their pre-pulverized structure even after pulverization treatment.

<Example 100>

Iron sulfate heptahydrate was dissolved in water, thereby preparing a 0.5 mol·dm$^{-3}$ iron sulfate aqueous solution. Aluminum sulfate 16-hydrate was added to 100 mL of the iron sulfate aqueous solution. At this time, the amounts of iron sulfate heptahydrate and aluminum sulfate 16-hydrate used were adjusted such that the amount of Al used was 30 mol% with respect to the total amount of Al and Fe used. The aqueous solution was heated in a constant temperature water bath set at 50°C, and sodium hydrogen carbonate in a molar amount (0.6 mol)12 times the molar amount of metal ions was gradually added while stirring the aqueous solution. Then, the aqueous solution was stirred at 200 rpm for 15 minutes. The obtained suspension was washed and dried in the same manner as in Example 1, thereby obtaining a powder before silica coating treatment. Further, the powder before silica coating treatment was treated by silica coating in the same manner as in Example 1, thereby obtaining an iron oxide powder.

The iron oxide powder of Example 100 was evaluated in the same manner as in Example 1. As a result, the iron oxide powder of Example 100 had high chroma, was uniform, and maintained high chroma even when heated at 1000°C for 3 hours. Thus, it was found that the powder is excellent in excellent heat resistance. The iron oxide powder of Example 100 was confirmed to have a bright red color without a significant decrease in chroma even after being pulverized. Thus, it was also found that the powder is excellent in strength.

Further, in each of the cases of the iron oxide powder (Example 101) prepared by replacing sodium hydrogen carbonate with ammonium hydrogen carbonate in Example 100, the iron oxide powder (Example 102) prepared by changing the stirring rate from 200 rpm to 100 rpm in Example 100, and the iron oxide powder (Example 103) prepared by replacing sodium hydrogen carbonate with ammonium hydrogen carbonate and changing the stirring rate from 200 rpm to 100 rpm in Example 100, the obtained results were similar to the results for the iron oxide powder of Example 100.

The disclosure of Japanese Patent Application No. 2019-230279 filed on December 20, 2019 is incorporated herein by reference in its entirety. All documents, patent applications, and technical standards described herein are incorporated herein by reference to the same extent that the individual documents, patent applications, and technical standards are specifically and individually stated to be incorporated herein by reference.

**Claims**

1. An iron oxide powder, comprising an iron oxide particle having an agglomerate of primary particles of iron oxide and a coating layer including silica which covers at least a part of a surface of the agglomerate, wherein:

   Al is solid-dissolved in, and alumina particles are scattered on a surface of, the primary particles of iron oxide, the agglomerate has a porous structure having pores inside and on the surface thereof, and a content of Si is from 8 mol% to 50 mol% with respect to a total content of Al, Si, and Fe.

2. The iron oxide powder according to claim 1, wherein the coating layer has an average thickness of from 3 nm to 12 nm.

3. The iron oxide powder according to claim 1 or 2, wherein the iron oxide particle has an average diameter of from 0.3 $\mu$m to 2 $\mu$m and an average thickness of from 0.15 $\mu$m to 0.8 $\mu$m.

4. The iron oxide powder according to any one of claims 1 to 3, wherein the primary particles of iron oxide have an average particle size of from 10 nm to 50 nm.

5. The iron oxide powder according to any one of claims 1 to 4, wherein the alumina particles have an average particle size of from 3 nm to 9 nm.

6. The iron oxide powder according to any one of claims 1 to 5, wherein a content of Al is from 10 mol% to 80 mol% with respect to a total content of Al and Fe.

7. The iron oxide powder according to any one of claims 1 to 6, wherein chroma c* in an L* a* b* color system is from 60 to 80.

8. The iron oxide powder according to any one of claims 1 to 7, wherein lightness L* in an L* a* b* color system is from 48 to 54.

9. The iron oxide powder according to any one of claims 1 to 8, wherein a* in an L* a* b* color system is from 35 to 40.

10. The iron oxide powder according to any one of claims 1 to 9, wherein b* in an L* a* b* color system is from 46 to 55.

11. The iron oxide powder according to any one of claims 1 to 10, wherein, when chroma before heating is designated as A and chroma after heating at 1000°C for 3 hours is designated as B, A - B is 3 or less.

12. A method of producing an iron oxide powder, including:

    a step of preparing an agglomerate having a porous structure having pores inside and on a surface thereof, and in which primary particles of iron oxide are agglomerated, wherein alumina particles are scattered on a surface of, and Al is solid-dissolved in, the primary particles; and
    a step of mixing the agglomerate with alkoxysilane,
    wherein, in the mixing step, mixing is carried out such that an amount of Si used is from 8 mol% to 50 mol% with respect to a total amount of Al, Si, and Fe used.

13. The method of producing an iron oxide powder according to claim 12, wherein the preparation step comprises:

    a step of mixing at least one metal salt selected from the group consisting of a ferrous salt and a ferric salt, an aluminum source, and a base, thereby producing a precursor by a co-precipitation method; and

a step of calcining the precursor,
wherein:

in the step of producing the precursor, mixing is carried out such that an amount of Al used is from 10 mol% to 80 mol% with respect to a total amount of Al and Fe, and
in the step of calcining the precursor, calcination is carried out at from 600°C to 1200°C.

14. The method of producing an iron oxide powder according to claim 13, wherein, in the step of calcining the precursor, a temperature increase rate to a maximum attained temperature is from 0.1°C/min to 200°C/min, and the maximum attained temperature is maintained for from 0.1 to 48 hours.

15. The method of producing an iron oxide powder according to claim 13 or 14, wherein:

the metal salt is at least one selected from the group consisting of iron (III) nitrate, iron (II) sulfate, and iron (II) chloride,
the aluminum source is aluminum nitrate, and
the base is ammonium hydrogen carbonate.

16. The method of producing an iron oxide powder according to claim 13 or 14, wherein:

the metal salt is iron (II) sulfate,
the aluminum source is aluminum sulfate, and
the base is sodium hydrogen carbonate.

FIG.1A

FIG.1B

FIG.2

FIG.3

FIG.4

# FIG.5

# FIG.6

FIG.7

## INTERNATIONAL SEARCH REPORT

| International application No. |
| --- |
| PCT/JP2020/046993 |

### A. CLASSIFICATION OF SUBJECT MATTER

C01G 49/00(2006.01)i; C09C 1/24(2006.01)i; C09C 3/06(2006.01)i
FI: C01G49/00 A; C09C3/06; C09C1/24

According to International Patent Classification (IPC) or to both national classification and IPC

### B. FIELDS SEARCHED

Minimum documentation searched (classification system followed by classification symbols)
C01G49/00; C09C1/24; C09C3/06

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2008-174405 A (THE UNIVERSITY OF TOKYO) 31 July 2008 (2008-07-31) paragraphs [0017]-[0051] | 1–16 |
| X | JP 2014-216034 A (FUJIFILM CORPORATION) 17 November 2014 (2014-11-17) paragraphs [0020], [0025]-[0034], [0046]-[0057] | 1–16 |
| A | JP 55-158130 A (TITAN KOGYO KK) 09 December 1980 (1980-12-09) entire text | 1–16 |
| A | JP 01-210466 A (COOKSON GROUP PLC) 24 August 1989 (1989-08-24) entire text | 1–16 |

☐ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 February 2021 (16.02.2021) | 22 February 2021 (22.02.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 4 079 690 A1**

| Patent Documents referred in the Report | Publication Date | Patent Family | Publication Date |
|---|---|---|---|
| JP 2008-174405 A | 31 Jul. 2008 | (Family: none) | |
| JP 2014-216034 A | 17 Nov. 2014 | US 2014-0314658 A1 paragraphs [0020], [0025]-[0034], [0046]-[0057] | |
| JP 55-158130 A | 09 Dec. 1980 | US 004374677 A1 entire text | |
| JP 01-210466 A | 24 Aug. 1989 | US 004898619 A1 entire text EP 000322173 A1 entire text | |

**INTERNATIONAL SEARCH REPORT**
Information on patent family members

International application no.

PCT/JP2020/046993

Form PCT/ISA/210 (patent family annex) (January 2015)

23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015086126 A
- JP 2004043208 A
- JP 2019230279 A

**Non-patent literature cited in the description**

- **HIDEKI HASHIMOTO et al.** *ACS Appl. Mater. Interfaces,* 2014, vol. 6, 20282-20289
- **HIDEKI HASHIMOTO et al.** *Dyes and Pigments,* 2012, vol. 95, 639-643